Europäisches Patentamt

European Patent Office

Office européen des brevets

(11) Publication number: 0 482 798 A1

# EUROPEAN PATENT APPLICATION

(21) Application number: 91309311.8

(22) Date of filing: 10.10.91

(51) Int. Cl.5: A01N 37/52, //(A01N37/52, 37:34)

(30) Priority: 15.10.90 US 597606

(43) Date of publication of application:
29.04.92 Bulletin 92/18

(84) Designated Contracting States:
AT BE CH DE DK ES FR GB GR IT LI LU NL SE

(71) Applicant: CALGON CORPORATION
Route 60-Campbell's Run Road
Robinson Township Pennsylvania 15205(US)

(72) Inventor: Farkas, John P.
1012 Harvest Court
Coraopolis, PA 15108(US)
Inventor: Tefft, Edwin R.
2359 Hidden Timber Drive
Pittsburgh, PA 15241(US)

(74) Representative: Hesketh, Alan, Dr. et al
European Patent Department Merck & Co.,
Inc. Terlings Park Eastwick Road
Harlow Essex, CM20 2OR(GB)

(54) Admixtures of 2-bromo-2-bromo-methylglutaronitrile and N,4-dihydroxy-alpha-oxobenzene-ethanimidoyl chloride.

(57) The instant invention is directed to synergistic antimicrobial admixtures comprising 2-bromo-2-bromomethyl-glutaronitrile and N,4-dihydroxy-$\alpha$ -ozobenzene-ethanimidoyl chloride, preferably in a liquid polyethylene glycol solvent, and the use thereof to inhibit microbial growth.

EP 0 482 798 A1

EP 0 482 798 A1

U.S. Pat. No. 3,733,351 discloses a method for producing 2-methylene glutaronitrile.

U.S. Pat. Nos. 3,833,730; 3,877,922; 3,873,597; 3,644,380; and 3,929,858; (which are hereby incorporated by reference) disclose 2-bromo-2-bromomethylglutaronitrile and its use as an antibacterial, antifungal, and algicidal agent.

U.S. Pat. Nos. 4,830,657; 4,612,328; 4,604,405 and 4,655,815 disclose synergistic compositions of BBMG and other antimicrobials to control and/or inhibit microbial growth.

Both 2-bromo-2-bromomethylglutaronitrile and N,4-dihydroxy-$\alpha$-oxobenzene-ethanimidoyl chloride, which is also known as 2-(p-hydroxyphenyl) glyoxoylhydroximoyl chloride, are known individually as antimicrobial agents. The instant inventors have discovered that they act synergistically in combination as antimicrobial agents.

The present invention is directed to synergistic antimicrobial admixtures comprising 2-bromo-2-bromethylglutaronitrile (hereinafter referred to as "BBMG") and N,4-dihydroxy-$\alpha$-oxobenzene-ethanimidoyl chloride (hereinafter referred to as "DHOBEC") which is known from CA 107 (22):204837r and which is available from Union Carbide under the tradename Piror$^R$ P-15. DHOBEC, which is commonly sold as a 15% solution (by weight) in polyethylene glycol 200, is known to be useful as a slimicide in the pulp and paper industry.

The present invention is also directed to a method of inhibiting microbial growth, comprising contacting said growth with an effective amount of an admixture of BBMG and DHOBEC.

As used herein, the terms "antimicrobial" and "inhibiting microbial growth" describe killing, inhibiting and/or controlling the growth of organisms such as bacteria, yeasts, fungi, and algae. A number of important industries can experience serious adverse effects from the activity of such organisms on the raw materials which they employ, on various aspects of their manufacturing activities, or on the finished products which they produce. Such industries include, but are not limited to, the paint, coatings, wood, textile, cosmetic, leather, tobacco, fur, rope, paper, pulp, plastics, fuel, oil, rubber, and machine industries. Important applications of the synergistic antimicrobial combinations of the present invention include, but are not limited to, inhibiting the growth of bacteria and fungi in paints, coatings, adhesives, latex emulsions, joint cements and miscellaneous process streams; preserving cutting oils; controlling slime-producing bacteria and fungi in pulp and paper mills and cooling towers; use as a spray or dip treatment for textiles and leather to prevent mold growth; use as a component of anti-fouling paints to prevent adherence of fouling organisms; use in protecting paint films, especially exterior paints, from attack by fungi which occurs during weathering of the paint film; use in protecting processing equipment from slime deposits during manufacture of cane and beet sugar; preventing or inhibiting microorganism buildup and deposits in air washer or scrubber systems and in industrial fresh water supply systems; controlling microorganism contamination and deposits in oil field drilling fluids and muds and in secondary petroleum recovery processes; preventing bacterial and fungal growth in paper coating processes where such growth might adversely affect the quality of the paper coating; use in paint manufacturing processes which are susceptible to degradation by microorganisms during storage and transportation; use as a hard surface disinfectant to prevent growth of bacteria and fungi on walls, floors, etc.; use as a wood preservative; and use in swimming pools, lakes and ponds to prevent algae growth.

The control of bacteria and fungi in pulp and paper mill water systems which contain aqueous dispersions of papermaking fibers is especially important. The uncontrolled buildup of slime produced by the accumulation of bacteria and fungi causes offgrade production, decreased production due to breaks and greater cleanup frequency, increased raw material usage, and increased maintenance costs. The problem of slime deposits has been aggravated by the widespread use of closed white water systems and the increasing use of alkaline pH conditions in the paper industry.

Another important area where control of bacterial and fungal growth is vital is in clay and pigment slurries. These slurries comprise various clays, including but not limited to kaolin, and various pigments, including but not limited to calcium carbonate and titanium dioxide, and are generally manufactured at a location separate from the end use location. For example, paper coating processes and paint manufacturing processes generally utilize clay and/or pigment slurries which are stored and held for later transport to the end use location. Because of the high quality standards of the paper and paint industries, it is essential that clay and pigment slurries have very low microorganism counts, so that they are usable in paper coating or paint manufacturing processes.

The synergistic combination of the present invention has been found to be especially useful in controlling the harmful effects of microorganisms in water or aqueous media. Systems which utilize circulating water or aqueous media become infected with microorganisms and experience substantial impairment of their efficiency when deposits of the microorganisms build up in the system. The deposits, called slimes, coat the walls of tanks and other vessels, and any machinery or processing equipment which

2

is employed, and create blockages in pipes and valves. The slimes also create discolorations and other imperfections in any products being produced, forcing costly shutdowns. Control of microorganisms in aqueous media is particularly important where there are dispersed particles or fines in the aqueous media, e.g., dispersed cellulosic fibers and dispersed fillers and pigments in papermaking, and dispersed pigments in paint manufacture.

DESCRIPTION OF THE INVENTION

The present invention is directed to a synergistic antimicrobial admixture comprising: a) 2-bromo-2-bromomethylglutaronitrile (BBMG) and b) N,4-dihydroxy-$\alpha$ -oxobenzene ethanimidoyl chloride (DHOBEC), wherein the a):b) weight ratio, on an active basis, ranges from about 100:1 to about 1:100.

Preferred proportions of BBMG and DHOBEC in the instant synergistic compositions generally range from about 20:1 to about 1:20, but may vary depending on the end use application for which the composition is utilized. Most preferred BBMG:DHOBEC ratios range from about 1:1 and 1:19.

The components of the instant composition are commercially available. BBMG is commercially available from Calgon Corporation, Pittsburgh, PA, as either a solid or as a 25% active aqueous dispersion under the tradenames Tektamer$^R$38 and Tektamer$^R$38 AD, respectively or as 10, 20 or 40% active solvent solutions. DHOBEC is commercially available from Union Carbide under the tradename Piror$^R$ P-15. Piror$^R$ P-15 is 15% active DHOBEC in PEG 200.

BBMG is soluble in glycols. Thus, a preferred method of formulating the instant compositions comprises preparing solutions of BBMG in a glycol such as PEG 200 and blending the BBMG/glycol composition with a DHOBEC/glycol composition such as Piror$^R$ P-15. Any glycol can be used. The preferred glycols are polyethylene glycols, and the most preferred glycol is PEG 200.

The present invention is also directed to a method for controlling and/or inhibiting microbial growth comprising contacting the organisms to be controlled or inhibited with an effective amount of both components of the instant compositions. The instant method may be utilized to control and/or inhibit microbial growth on a designated surface or in an object system or composition. For example, the instant method may be used to control and/or inhibit microbial growth in coating products such as water or solvent-based paints, in aqueous systems such as cooling towers, in lubrication systems, in clay and/or pigment slurries, and in paper process streams. In all applications, the instant method comprises adding an antimicrobially effective amount of the instant BBMG:DHOBEC compositions to the surface system or composition being treated.

Thus, the synergistic antimicrobial compositions of the present invention may be used in diverse formulations, including but not limited to solid compositions comprising, for example, finely divided powders and/or granular materials; and liquid compositions, such as solutions, emulsions, suspensions, concentrates, emulsifiable concentrates, slurries and the like, depending upon the application intended, and the formulation media desired. Further, when the instant synergistic antimicrobial compositions are used in liquid form, they may be employed neat or may be incorporated into various formulations, both solid and liquid, or as an adsorbate on suitable inert carriers such as talc, clays, diatomaceous earth and the like.

Thus, it will be appreciated that the instant synergistic antimicrobial compositions may be employed to form antimicrobial formulations containing the BBMG:DHOBEC composition as the essential active ingredient, which formulations may also contain a variety of carrier materials adaptable to industrial and agricultural applications including finely divided dry or liquid diluents, extenders, clays, diatomaceous earth, talc and the like, or water or various organic liquids such as lower alkanols, kerosene, benzene, toluene and other petroleum distillate fractions or mixtures thereof.

It will be understood also that the instant BBMG:DHOBEC antimicrobial compositions may be used in combination with other antimicrobial materials. For example, it is believed that the instant combinations can be combined with other fungicides and bactericides such as 2-(4'-thiazolyl)benzimidazole, sorbic acid, propionic acid, mycostatin, sodium diacetate, trichomycin, amphotericin, griseofulvin, undecylenic acid, esters of parahydroxybenzoic acid, chloroguinaldol, 5,7-dichloro-8-hydroxyquinoline, sodium-o-phenyl-phenate, o-phenylphenol, biphenyl chlorinated phenols, sodium benzoate in appropriate concentrations and in appropriate instances so as to combine the action of each to obtain particularly useful results. Such combinations might find particular application in the preparation of germicidal soaps, in the production of cosmetics and aqueous coatings and in combatting paper mill slime accumulations. It is also quite clear that the instant synergistic antimicrobial combinations can be combined with other algicidal agents such as benzalkonium chlorides and other quaternary ammonium compounds to obtain formulations particularly suitable to special problems of algae control.

3

In accordance with the present invention there is still further provided a method of inhibiting the growth of at least one of: bacteria, yeast, fungi, and algae, comprising contacting said bacteria, yeast, fungi, or algae, with a bactericidally, fungicidally, or algicidally effective amount of the instant synergistic antimicrobial compositions comprising BBMG and DHOBEC.

The antimicrobial methods of treatment of the present invention involve contacting the microorganisms to be controlled or inhibited with an effective amount of the instant synergistic antimicrobial compositions. This can be accomplished either by addition of BBMG and DHOBEC in combination as a single composition, or by addition of the two components separately. Such separate co-administration can occur either at the same time or at different times, and order-of-addition is not believed to be critical. The net effect will generally be the same; the composition, surface or system being treated will ultimately have incorporated thereon or therein the instant synergistic antimicrobial composition.

As used herein, the terms "antimicrobially effective amount" and "effective amount" refer to the dosage of the instant composition necessary to provide the desired level of prevention, inhibition or control. The necessary dosage for a particular application depends on factors such as ambient temperature, the organisms present, process parameters such as pH, temperature, etc., and treatment or product specifications. Generally, at least about 0.1 ppm, based on the total weight of the system or composition being treated, of the instant BBMG:DHOBEC composition is required. More preferably, the dosage of the instant composition should range from about 0.5 to about 50,000 ppm, based on active BBMG:DHOBEC relative to the total weight of the system or compositions being treated.

As noted above, the instant invention is based upon the discovery that BBMG and DHOBEC interact synergistically in controlling microbial growth, including the growth of bacteria, yeast, fungi and algae in a variety of industrial applications. However, these compositions are also believed to be useful in agricultural applications such as in the control of soil fungi and bacteria and for the protection of seeds, bulbs and plants. Also, they are background to be effective algicides in the treatment of swimming pools, fountains, ponds, cooling water systems and the like.

The utility of the synergistic antimicrobial compositions of this invention is shown not only by their activity against bacteria and fungi responsible for stunting growth, and even destruction of many types of crop-producing plants, but also against those causing degradation and deterioration of many types of industrial products including, paper, leather, wood, textiles, aqueous systems such as adhesives, resins, drilling fluids, pigment dispersions and latex paints and oleoresinous coatings whose films are particularly vulnerable to the destructive action of fungi. The large economic losses encountered in paper-making operations caused by the accumulation of bacterial and fungal slimes in various parts of the system can be eliminated to a significant extent by use of the instant synergistic BBMG:DHOBEC compositions described herein.

The antimicrobial activity of the compositions described above has been confirmed using standard laboratory techniques. They are believed to be effective, for example, in inhibiting bacteria including, but not limited to, Klebsiella pneumoniae, Pseudomonas and micrococcus species. They are also believe to be effective against fungi including Penicillin species, Saccharomyces species, Candida species Fusarium species, Aspergillus species, and Cephalosporium species. Further, they may be used to control overgrowth of algae such as Chlorella sp. including C. pyrenoidosa. Such bacteria and/or fungi commonly are found on cereal and grain products, in clay and pigment slurries, in oils and other hydrocarbon liquids and/or waxes, on fruits and vegetables and on cosmetics, leather, electrical insulation, textiles and numerous other materials capable of supporting their growth. Also, such bacteria and/or fungi may be found on plants, seeds, fur, wood and in soils.

As noted above, it is believed that growth of various harmful fungi and bacteria existing in soil can be inhibited, controlled and/or eliminated by use of the instant synergistic antimicrobial compositions. The term "soil" as used herein is intended to include all media capable of supporting growth of plants and may include humus, sand, manure, compost, artificially created plant growth solutions and the like.

The instant synergistic antimicrobial compositions described above have improved activity against bacteria, yeast, fungi, and algae over the activity of the components added separately, when employed at appropriate levels of concentrations. They therefore may be used to inhibit or control the growth of these organisms. It will be obvious to those skilled in the art that the required effective concentration will vary with particular organisms and in particular applications. In general, however, effective fungicidal, bactericidal and algicidal response is obtained when the synergistic antimicrobial combination is employed in concentrations ranging between about 0.01 to about 50,000 parts per million on an active basis. Preferably, the instant composition should contain between about 0.1 and about 5,000 parts BBMG and between about 0.1 and about 5,000 parts of DHOBEC, by weight. In such compositions the weight ratio of BBMG:DHOBEC should range from about 20:1 to 1:20, most preferably from about 1:1 to about 19:1.

4

Of course, the precise dosages of the components which will be employed depends upon a number of factors. First, the composition dosage is indicated in parts per million (ppm), which refers to the concentration of the total active ingredients of the instant compositions, by weight, in the environment being treated. This concentration is based on 100% active ingredients for convenience in evaluating and comparing test data. In actual practice, however, various percentages of active ingredient may actually be used, with the balance of the composition being added comprising conventional excipients such as dispersants, stabilizers, preservatives, solvents, co-solvents, diluents, and the like.

Compositions exemplary of the best mode known to the inventors may be prepared by blending a composition consisting of BBMG, such as Tektamer[R] 38, in PEG 200 with a composition consisting of DHOBEC, such as Piror[R] P-15, in PEG 200. Order-of-addition is not believed to be critical. Thus, the most preferred compositions of the instant invention comprise Tektamer[R] 38 and Piror[R] P-15 in PEG 200. The most preferred ratio of Tektamer[R] 38:Piror[R] P-15 in these compositions ranges from about 1:1 to about 1:19. Also, however, blends of the active components may be prepared using dry BBMG and DHOBEC constituents, or the instant compositions may be aqueous suspensions of BBMG and DHOBEC or BBMG and DHOBEC may be dissolved in other solvents, including, but not limited to acetone, ethyl acetate, diethylene glycol monomethyl ether, methanol or ethanol.

A method exemplary of the best mode simply comprises contacting the organism to be inhibited or controlled with an amount of the above described Tektamer[R] 38/Piror[R] P-15/PEG 200 composition effective to achieve the desired level of control.

Further, the components of the instant synergistic antimicrobial compositions of the present invention may be added to the surface, composition or system to be treated as separate entities (for example, as separate glycol compositions) or in combination. The two components are physically and chemically compatible and may be combined simply as active ingredients, or may additionally be combined with commonly employed carriers and excipients as described above.

EXAMPLES

The following examples will serve to further illustrate the present invention. These examples should not, however, be construed as limiting the instant invention in any way.

Example 1: Preparation of a 1:1 BBMG:DHOBEC composition in PEG 200.

A 15% solution of Tektamer[R] 38 was prepared in PEG 200. This was mixed 1:1 with Piror[R] P-15 (15% active), producing a glycol solution of 15% active BBMG + DHOBEC. This solution was placed in a freezer for 16 days. After removal, the solution remained amber colored, clear and viscous.

Example 2: Microtiter Testing

In this study each compound was tested on a ppm active basis. Synergism was demonstrated by adding BBMG and DHOBEC in varying ratios by weight, and over a wide range of concentrations, to nutrient broth medium in multiwell sterile plastic plates. Stock solutions of each product were prepared in PEG 200 (polyethylene glycol 200). Synergism was measured by the method first described by F. C. Kull, P. C. Eisman, H. D. Sylwestrowicz, and R. L. Mayer in Applied Microbiology, 9, 538-41, (1946), in which they defined synergism as K where:

$$K = \frac{Q_A}{Q_a} + \frac{Q_B}{Q_b}$$

In which:

$Q_a$ - The quantity of the first compound that, when used alone, gave the desired result.

$Q_b$ - The quantity of the second compound that, when used alone, gave the desired result.

$Q_A$ - The quantity of the first compound, in the mixture, which gave the desired result.

$Q_B$ - The quantity of the second compound, in the mixture, which gave the desired result.

This manner of determining synergism has been widely used and accepted in industry. However, for further information, see U.S. Pat. No. 3,231,509.

The following protocol was used to determine the biostatic and biocidal activity of the instant compositions:

Bacteria Culture:   Dilute an overnight broth culture of the desired organism 1/1000 in the appropriate broth prior to testing.

Biocide:   Prepare an 8000 ppm stock solution of each test compound in appropriate solvent.

Place 0.05 ml of appropriate nutrient broth in the 12 wells of each row of the culture plate (96 wells/plate, 8x12).

Mix the stock solutions of each test compound in the desired weight ratio, producing a working stock solution containing 8000 ppm total active biocide.

Add 0.05 ml of the appropriate biocide working stock solution to the first well of each row of the culture plate.

Mix the broth plus biocide stock solution in the first well using a calibrated spiral wire loop and transfer 0.05 ml of this mixture (using the same loop) to the second well.

Continue the procedure until 10 wells contain biocide.

The 12th well serves as an untreated control. The 11th well remains empty.

Innoculation:   Place 0.05 ml of the diluted culture inoculum in each well (except 11th) of each row. The wells in each row will have the following concentration of total active biocide:

| Well Number | Total Actives Concentrations (ppm) |
|---|---|
| 1 | 2000 |
| 2 | 1000 |
| 3 | 500 |
| 4 | 250 |
| 5 | 125 |
| 6 | 62.5 |
| 7 | 31.2 |
| 8 | 15.6 |
| 9 | 7.8 |
| 10 | 3.9 |
| 11 | - |
| 12 | 0 |

Incubation:   Incubate the plates for an appropriate period of time (i.e., sufficient time to allow growth in the untreated control wells).

Reading:   Read the plates after the appropriate incubation interval using the Test Reading Mirror.

For the inhibition test, the Minimal Inhibitory Concentration (MIC) is the least amount of biocide that results in no evidence of growth at the end of the incubation period. (Growth is evident either by turbidity or a button of cells at the bottom of the well.)

For the biocidal test, remove the covers from the inhibition plates after the desired contact time.

Subculture the inhibition plates, using an inoculating probe, to a plate containing 0.1 ml of broth in each well. Return the inhibition plates to the incubator after subculture.

Incubate subculture plates as in the inhibition study. The Minimum Biocidal Concentration (MBC) is represnted by the lowest concentration which results in no growth after subculture and subsequent incubation.

Organisms:   The organisms tested are shown in Table I.

TABLE I

| TEST ORGANISMS USED FOR EXPERIMENTS | | |
|---|---|---|
| Organism | Reference | Medium |
| *Pseudomonas aeruginosa* | ATCC 10145-U | TGE* |
| Acid A | Acid Paper Process Isolate | TGE |
| Acid B | Acid Paper Process Isolate | TGE |
| Alkaline A | Alkaline Paper Process Isolate | TGE |
| Alkaline B | Alkaline Paper Process Isolate | TGE |
| Mix | Mixture of all test organisms | TGE |

*TGE = Tryptone Glucose Extract Agar

Results

Tables II and III give values of K calculated for various ratios of BBMG to DHOBEC for each test organism (or mix). Within each table the values are listed in order of increasing K value for inhibition. It is clear from these values that the combination of the two actives improves their performance. This is especially true under alkaline conditions in which very small values of K were obtained (less than 0.2). Biocidal effectiveness is also enhanced through combination. This is evident by the K values obtained for biocidal effectiveness at 1, 3, 5, and 24 Hours of contact. Not only is the preservative quality of the mixture better than that of either compound acting alone, so is its killing efficiency.

In testing for synergism, use of Pseudomonas aeruginosa and wild isolates was considered to be important because Ps. aeruginosa is found in nearly all paper making systems, and the wild strains had been particularly difficult to control in their respective systems. It is clear from past experience that once these organisms can be controlled, the system will be under control.

TABLE II

## Values of K[1] Obtained for Various Combinations of BBMG and DHOBEC Against Different Test Organims Acid Conditions

| Organism | Wt. Ratio BBMG:DHOBEC | K Inhibition | K 1 Hr. Biocidal Effect | K 3 Hr. Biocidal Effect | K 5 Hr. Biocidal Effect | K 24 Hr. Biocidal Effect |
|---|---|---|---|---|---|---|
| *Pseudomonas aeruginosa* | 5:1 | 0.4434 | 0.6115 | 0.9678 | 0.6984 | 0.6101 |
| Acid B | 1:1 | 0.4447 | 0.8641 | 0.4391 | 0.5446 | 0.3490 |
|  | 20:1 | 0.4536 | 0.7931 | 0.8999 | 0.9280 | 0.5427 |
| Acid A | 1:13 | 0.4667 | 0.6369 | 0.3899 | 0.4469 | 0.4485 |
| *Pseudomonas aeruginosa* | 1:11 | 0.5636 | 0.5447 | 0.6049 | 0.6349 | 0.5432 |
| Mix | 5:1 | 0.5933 | 0.6956 | 0.3790 | 0.5516 | 0.3209 |
|  | 20:1 | 0.6159 | 0.7733 | 0.8532 | 0.9385 | 0.6035 |
| Acid B | 1:13 | 0.6543 | 0.5606 | 0.5613 | 0.6855 | 0.6338 |
| *Pseudomonas aeruginosa* | 1:1 | 0.6624 | 0.6540 | 0.7056 | 0.9524 | 0.5804 |
|  | 1:9 | 0.6855 | 0.6253 | 0.4973 | 0.4714 | 0.5144 |
| Acid A | 1:20 | 0.6940 | 0.6518 | 0.5982 | 0.6850 | 0.6758 |
|  | 1:8 | 0.7102 | 0.6119 | 0.5625 | 0.8612 | 0.6678 |
| *Pseudomonas aeruginosa* | 1:13 | 0.7540 | 0.8264 | 0.4580 | 0.4796 | 0.1355 |
| Acid B | 1:20 | 0.8714 | 0.7650 | 0.7656 | 0.9346 | 0.8532 |
| *Pseudomonas aeruginosa* | 1:5 | 0.9170 | 0.7517 | 0.7762 | 0.8293 | 0.9177 |
| Mix | 1:6 | 0.9239 | 0.6216 | 0.6698 | 0.9679 | 0.8632 |
| *Pseudomonas aeruginosa* | 1:8 | 0.9319 | 0.7953 | 0.5175 | 0.5463 | 0.7275 |
| Mix | 1:9 | 0.9454 | 0.7577 | 0.8746 | 0.9266 | 0.9501 |

$Q_a$ = The quantity of the first compound that, when used alone, gave the desired result.

$Q_b$ = The quantity of the second compound that, when used alone, gave the desired result.

Definition of K:

$$K = \frac{Q_A}{Q_a} + \frac{Q_B}{Q_b}$$ Where:

$Q_A$ = The quantity of the first compound in the mixture which gave the desired result.

$Q_B$ = The quantity of the second compound in the mixture which gave the desired result.

---

1 Values of K which are <1 are indicative of Synergism.

TABLE III

## Values of K² Obtained for Various Combinations of BBMG and DHOBEC Against Different Test Organims Alkaline Conditions

| Organism | Wt. Ratio BBMG:DHOBEC | K Inhibition | K 1 Hr. Biocidal Effect | K 3 Hr. Biocidal Effect | K 5 Hr. Biocidal Effect | K 24 Hr. Biocidal Effect |
|---|---|---|---|---|---|---|
| Pseudomonas aeruginosa | 20:1 | 0.0255 | 0.3167 | 0.1272 | 0.0998 | 0.0743 |
|  | 1:1 | 0.0380 | 0.2593 | 0.2116 | 0.2332 | 0.1297 |
|  | 1:20 | 0.1168 | 0.1854 | 0.1134 | 0.1600 | 0.1660 |
| Mix | 5:1 | 0.1250 | 0.4083 | 0.3766 | 0.3304 | 0.1921 |
|  | 20:1 | 0.1317 | 0.5315 | 0.4104 | 0.3600 | 0.3477 |
|  | 1:1 | 0.1760 | 0.4355 | 0.4120 | 0.3869 | 0.4626 |
|  | 1:20 | 0.2205 | 0.3149 | 0.2757 | 0.2897 | 0.3954 |
| Alk B | 1:20 | 0.2865 | 0.6191 | 0.5992 | 0.6157 | 0.3117 |
|  | 1:1 | 0.3304 | 0.7035 | 0.6684 | 0.5042 | 0.6953 |
| Alk A | 5:1 | 0.3910 | 0.5998 | 0.4825 | 0.4286 | 0.5634 |
|  | 1:1 | 0.5332 | 0.6456 | 0.4110 | 0.5143 | 0.5682 |
| Alk B | 20:1 | 0.5535 | 0.4384 | 0.5840 | 0.4909 | 0.8018 |
|  | 20:1 | 0.5920 | 0.5835 | 0.5268 | 0.5425 | 0.6575 |
| Mix | 1:11 | 0.6464 | 0.9388 | 0.5513 | 0.9881 | 0.8014 |
| Pseudomonas aeruginosa | 1:13 | 0.6832 | 0.6608 | 0.6055 | 0.8479 | 0.8935 |
|  | 1:11 | 0.6850 | 0.6617 | 0.6057 | 0.8451 | 0.8975 |
| Alk B | 1:13 | 0.8473 | 0.1146 | 0.5911 | 0.1525 | 0.5375 |
|  | 1:11 | 0.8890 | 0.1518 | 0.1468 | 0.3035 | 0.4176 |

Where:

$Q_a$ = The quantity of the first compound that, when used alone, gave the desired result.

$Q_b$ = The quantity of the second compound that, when used alone, gave the desired result.

$Q_A$ = The quantity of the first compound in the mixture which gave the desired result.

$Q_B$ = The quantity of the second compound in the mixture which gave the desired result.

Definition of K:

$$K = \frac{Q_A}{Q_a} + \frac{Q_B}{Q_b}$$

2 Values of K which are <1 are indicative of Synergism.

## Claims

1. A synergistic antimicrobial admixture comprising:
   a) 2-bromo-2-bromomethylglutaronitrile and
   b) N,4-dihydroxy-α-oxobenzene-ethanimidoyl chloride, wherein the weight ratio of (a):(b), on an active basis, ranges from about 100:1 to about 1:100.

2. The admixture of Claim 1, additionally comprising a glycol solvent.

9

3. The admixture of Claim 2, wherein said glycol solvent is PEG 200.

4. The admixture of Claim 2, wherein the weight ratio of (a):(b) range from about 20:1 to 1:20.

5. A method of inhibiting microbial growth, comprising contacting the organisms to be controlled and/or inhibited with an effective amount of:
   a) 2-bromo-2-bromomethylglutaronitrile and
   b) N,4-dihydroxy-$\alpha$-oxobenzene-ethanimidoyl chloride, wherein the weight ratio of (a):(b) ranges from about 100:1 to about 1:100.

6. The method of Claim 5, wherein said microbial growth is contacted with a) and b) individually.

7. The method of Claim 5, wherein said microbial growth is contacted with a composition comprising a) 2-bromo-2-bromomethylglutaronitrile and b) N,4-dihydroxy-$\alpha$-oxybenzene-ethanimidoyl chloride.

8. The method of Claim 7, wherein said composition further comprises a glycol solvent.

9. The method of Claim 8, wherein said solvent is PEG 200.

10. The method of Claim 9, wherein the ratio of a):b) ranges from about 1:20 to about 20:1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 077 915  (ROUSSEL-UCLAF)<br>* page 1, line 1 - line 9 *<br>* page 1, line 17 - line 30 *<br>* page 2, line 25 - line 29 *<br>* page 2; example 1 *<br>* claims 1-3 * * | 1-10 | A 01 N 37/52 //<br>(A 01 N 37/52<br>A 01 N<br>A 01 N 37:34 ) |
| A | US-A-4 661 518  (T.M.LAMARRE ET AL.)<br>* column 1, line 8 - line 23 *<br>* column 1, line 50 - column 2, line 12 *<br>* claim 1 * * | 1-10 | |
| D,A | US-A-3 877 922  (N.GRIER ET AL.)<br>* column 1, line 5 - column 2, line 31 *<br>* column 3, line 14 - line 36 *<br>* examples 2,3 *<br>* claim 1 * * | 1-10 | |
| A<br><br>D | EP-A-0 196 452  (CALGON)<br>* column 1, line 8 - column 5, line 37 *<br>* claims 1,4 * *<br>(& US-A-4 655 815) | 1-10 | TECHNICAL FIELDS SEARCHED (Int. Cl.5)<br><br>A 01 N |

The present search report has been drawn up for all claims

| Place of search | Date of completion of search | Examiner |
|---|---|---|
| The Hague | 17 December 91 | LAMERS W. |